# EUROPEAN PATENT APPLICATION

(11) **EP 2 784 684 A1**
(43) Date of publication of application: **01.10.2014**
(21) Application number: 14161212.7
(22) Date of filing: 24.03.2014
(51) Int. Cl.: G06F 12/08

(54) **Operation processing apparatus, information processing apparatus and method of controlling information processing apparatus**

(30) Priority: 29.03.2013 JP 2013074711
(71) Applicant: FUJITSU LIMITED, Kawasaki-shi, Kanagawa 211-8588 (JP)
(72) Inventor: Aoyagi, Takahiro, Sunnyvale, CA California 94085 (US); Hikichi, Toru, Kawasaki-shi, Kanagawa 211-8588 (JP)
(74) Representative: Ward, James Norman

(57) **Abstract**

An operation processing apparatus (50) includes an operation processing unit (500) to perform an operation process using first data administered by the own operation process ing apparatus and second data acquired from another operation processing apparatus (600,700); a main memory (502) to store the first data; and a control unit (501) to include a directory unit to store status of data indicating whether or not the first data is held by another operation processing apparatus and a counter (501b) to indicate a transition between the status in which the first data is held by another operation processing apparatus and the status in which the first data is not held thereby, wherein when the counter indicates that the first data is not held by another operation processing apparatus and a data acquisition request occurs for the first data, the control unit skips a process for referring to the status of use of the first data.

## Description

### FIELD

The embodiments described herein are related to an operation processing apparatus, an information processing apparatus and a method of controlling an information processing apparatus.

### BACKGROUND

An operation processing apparatus is applied to practical use for sharing data stored in a main memory among a plurality of processor cores in an information processing apparatus. Plural pairs of a processor core and an L1 cache form a group of processor cores in the information processing apparatus. A group of processor cores is connected with an L2 cache, an L2 cache control unit and a main memory. A set of the group of processor cores, the L2 cache, the L2 cache control unit and the memory is referred to as cluster.

A cache is a storage unit with small capacity which stores data used frequently among data stored in a main memory with large capacity. When data in a main memory is temporarily stored in a cache, the frequency of access to the memory, which is time-consuming, is reduced. The cache employs a hierarchical structure in which processing at higher speed is achieved in a higher level and a larger capacity is achieved in a lower level.

In a directory-based cache coherence control scheme, the L2 cache as described above stores data requested by the group of processor cores in the cluster to which the L2 cache belongs. The group of processor cores is configured to acquire data more frequently from an L2 cache closer to the group of processor cores. In addition, data stored in a main memory is administered by the cluster to which the memory belongs in order to maintain the data consistency.

Further, the cluster administers in what state data in the memory to be administered is and in which L2 cache the data is stored according to this scheme. Moreover, when the cluster receives a request to the memory for acquiring data, the cluster performs appropriate processes for the data acquisition request based on the current state of the data. And then the cluster performs the processes for the data acquisition request and updates the information related to the state of the data.

As illustrated in Patent Document 1, a proposal is offered for administering the status of data and the number of times of writing data back when the data is acquired from the memory in the operation processing apparatus employing the above cluster configuration and processing system. A counter is provided in an L2 cache controller. And the cluster refers to the counter in the directory RAM and performs data acquisition processes.

### [Patent document]

[Patent document 1] Japanese Laid-Open Patent Publication No.2000-259596

### SUMMARY

In the above described technologies, the cluster obtains the reference result from the directory RAM and then determines the operations for acquiring the data. The process for referring to the directory RAM leads to latency associated with the data acquisition. In addition, the process for referring to the directory RAM increases electricity consumption.

Thus, it is an object of one aspect of the technique disclosed herein to provide an operation processing apparatus, information processing apparatus and a method of controlling an information processing apparatus to reduce the latency and the electricity consumption associated with the data acquisition from the memory. According to an aspect of the embodiments, it is provided an operation processing apparatus connected with another operation processing apparatus including an operation processing unit configured to perform an operation process using first data administered by the own operation processing apparatus and second data administered by another operation processing apparatus and acquired from another operation processing apparatus, a main memory configured to store the first data, and a control unit configured to include a storing unit configured to store a status of use of data indicating whether or not the first data is held by another operation processing apparatus anda indicatingunit configured to indicate a transitionbetween the status in which the first data is held by another operation processing apparatus and the status in which the first data is not held by another operation processing apparatus, wherein when the indicating unit indicates that the first data is not held by another operation processing apparatus and a data acquisition request occurs for the first data, the control unit skips a process for referring to the status of use of the first data stored in the storing unit.

An operation processing apparatus, an information processing apparatus and a method of controlling an information processing apparatus according to one embodiment may reduce the latency and the electricity consumption associated with data acquisition from a main memory.

### BRIEF DESCRIPTION OF THE DRAWINGS

FIG. 1 is a diagram illustrating a part of a cluster configuration in an information processing apparatus according to a comparative example;
FIG. 2 is a diagram schematically illustrating a configuration of an L2 cache control unit according to the comparative example;
FIG. 3 is a diagram illustrating processes when a data acquisition request is generated in a cluster according to the comparative example;
FIG. 4 is a diagram illustrating processes performed in the L2 cache control unit in the processing example as illustrated in FIG. 3;
FIG. 5 is a diagram illustrating processes when a data acquisition request is generated in the cluster according to the comparative example;
FIG. 6 is a diagram illustrating processes performed in the L2 cache control unit in the comparative example as illustrated in FIG. 5;
FIG. 7 is a diagram schematically illustrating a part of a cluster configuration in an information processing apparatus according to an embodiment;
FIG. 8 is a diagram illustrating an L2 cache control unit in a cluster according to the embodiment;
FIG. 9 is a diagram schematically illustrating update processes of an entry in a directory RAM;
FIG. 10 a diagram illustrating a circuit which forms the controller according to the embodiment;
FIG. 11 a diagram illustrating a circuit which forms the controller according to the embodiment;
FIG. 12 is a diagram illustrating processes performed when a data acquisition request is generated in a cluster according to the embodiment;
FIG. 13 is a diagram illustrating processes performed in the L2 cache control unit in the process example as illustrated in FIG. 12;
FIG. 14 is a timing chart in the process example as illustrated in FIGS. 12 and 13;
FIG. 15 is a diagram illustrating an example of a configuration of a controller according to the embodiment;
FIG. 16 is a diagram illustrating an example of a configuration of a controller according to the embodiment; and
FIG. 17 is a diagram illustrating an example of configurations of a counter and a directory RAM according to the embodiment.

### DESCRIPTION OF EMBIDOMENTS

First, a comparative example of an information processing apparatus according to one embodiment is described with reference to the drawings.

### (Comparative Example)

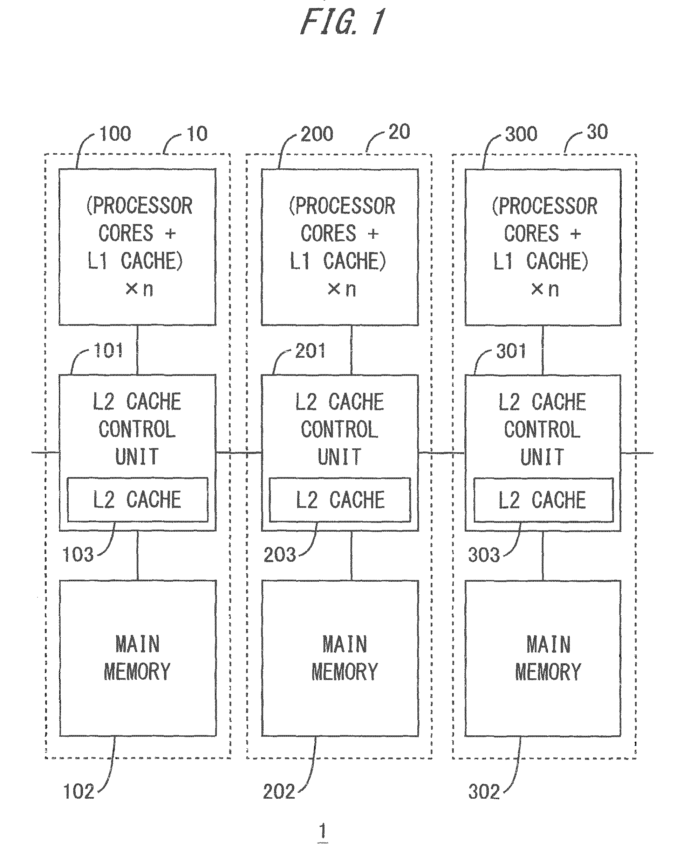

FIG. 1 illustrates a part of a cluster configuration in an information processing apparatus according to the comparative example. As illustrated in FIG. 1, a cluster 10 includes a group of processor cores 100 which include n (n is a natural number) combinations of an processor core and an L1 cache, an L2 cache control unit 101 and a main memory 102. The L2 cache control unit101 includes an L2 cache 103. Similar to the cluster 10, clusters 20 and 30 also include groups of processor cores 200 and 300, L2 cache control units 201 and 301, memories 202 and 302, and L2 caches 203 and 303 respectively.

In the following descriptions, a cluster to which an processor core requesting data stored in a main memory belongs is referred to as Local (cluster). In addition, a cluster to which the memory storing the requested data belongs is referred to as Home (cluster). Further, a cluster which is not Local and holds the requested data is referred to as Remote (cluster). Therefore, each cluster can be Local, Home and/or Remote according to where data is requested to or from. Moreover, a Local cluster also functions as Home in some cases for performing processes related to a data acquisition request. And a Remote cluster also functions as Home in some cases. Additionally, the state information of data stored inamainmemory administered by a Home cluster is referred to as directory information. The details of the above components are described later.

As illustrated in FIG. 1, an L2 cache control unit in each cluster is connected with another L2 cache control unit via a bus or an interconnect. In the information processing apparatus 1, since the memory space is so-called flat, it is uniquely determined by physical addresses which data is stored in a main memory and which cluster the memory belongs to.

For example, when the cluster 10 acquires data stored not in the memory 102 but in the memory 202, the cluster 10 sends a data request to the cluster 20, to which the memory 202 storing the data belongs. The cluster 20 checks the state of the data. Here, the state of data means the status of use of the data such as in which cluster the data is stored, whether or not the data is being exclusively used, and in what state the synchronization of the data is in the information processing apparatus 1. In addition, when the data to be acquired is stored in the L2 cache 203 belonging to the cluster 20 and the synchronization of the data is established in the information processing apparatus 1, the cluster 20 sends the data to the cluster 10 requesting the data. And then the cluster 20 records in the state information of the data that the data is sent to the cluster 10 and the data is synchronized in the information processing apparatus 1.

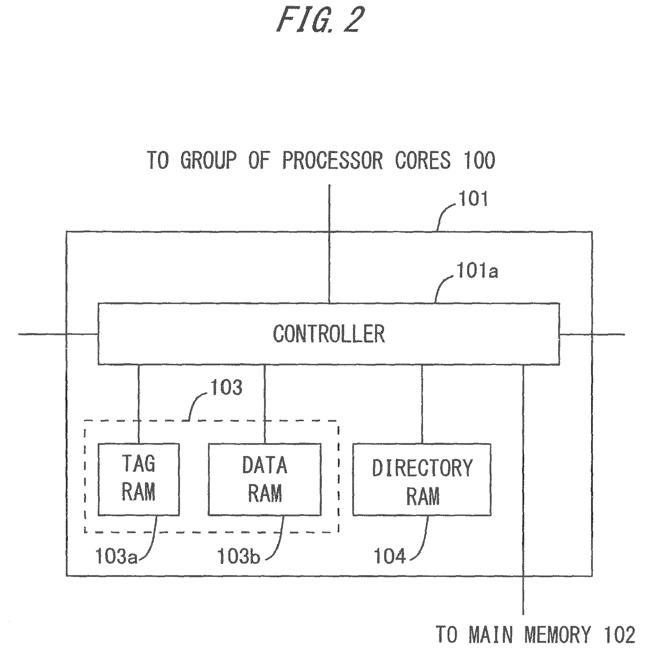

FIG. 2 schematically illustrates a configuration of the L2 cache control unit 101. The L2 cache control unit 101 includes a controller 101a, an L2 cache 103 and a directory RAM 104. In addition, the L2 cache 103 includes a tag RAM 103a and a data RAM 103b. The tag RAM 103a holds tag information of blocks held by the data RAM 103b. The tag information means information related to the status of use of each data, addresses in a main memory and the like in the coherence protocol control. In a multiple processor environment, in which a plurality of processors are used, it is more likely that processors share the same data and access to the data. Therefore, the consistency of data stored in each cache is maintained in the multiple processor environment. A protocol for maintaining the consistency of data among processors is referred to as coherence protocol. MESI protocol is one example of such a protocol. In the following descriptions, MESI protocol, which administers the status of use of data with four states, Modified, Exclusive, Shared and Invalid, is used. However, available protocols are not limited to this protocol.

The controller 101a uses the tag RAM 103a to check in which state a main memory block is stored in the data RAM 103b and the presence of data. The data RAM 103b is a RAM for holding a copy of data stored in the memory 102, for example. The directory RAM 104 is a RAM for handling the directory information of a main memory which belongs to a Home cluster. Since the directory information is a large amount of information, the directory information is stored in a main memory and a cache for the memory is arranged in the RAM in many cases. However, the directory information of the memory which belongs to the Home cluster is stored in the directory RAM 104 in the present embodiment.

The controller 101a accepts requests from the group of processor cores 100 or controllers in L2 cache control units in other clusters. The controller 101a sends operation requests to the tag RAM 103a, the data RAM 103b, the directory RAM 104, the memory 102 or other clusters according to the contents of received requests. And when the requested operation is completed, the controller 101a returns the operation results to the requestors of the operations.

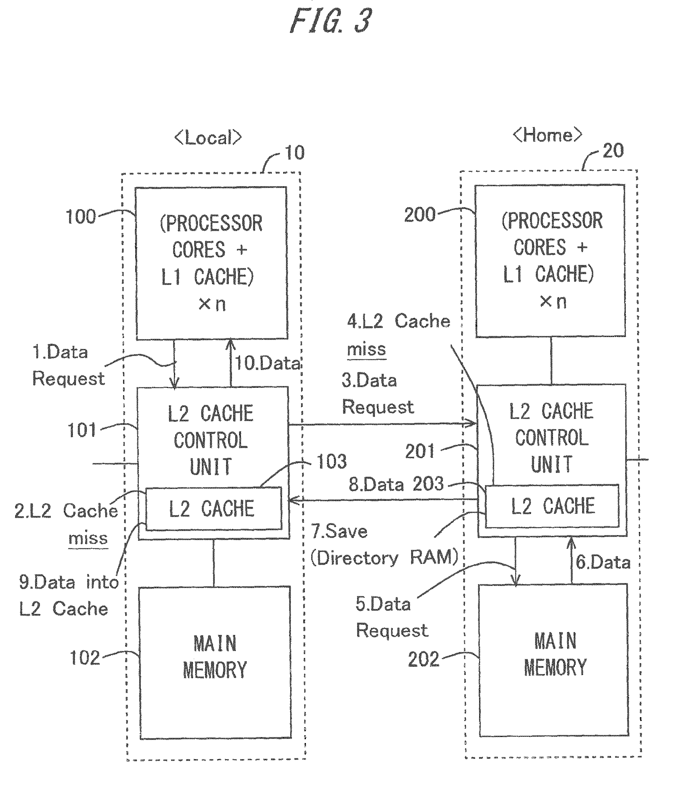

FIG. 3 is a diagram illustrating an example of processes performed when a data acquisition request is generated in the cluster 10. The cluster 10 is a Local cluster and a Home cluster in FIG. 3. FIG. 3 illustrates processes performed when a data acquisition request to the memory 102 which belongs to the cluster 10 is generated and cache miss occurs in the L2 cache 103. It is assumed here that the cache miss occurs in the L1 cache when the L2 cache control unit receives the data acquisition request.

A request of data is sent from an processor core in the group of processor cores 100 in the cluster 10 which is Local to the L2 cache control unit 101. The request includes address information indicating that the requested data is data to be stored in the memory 202 in the cluster 20. The L2 cache control unit 101 in the cluster 10 determines that the L2 cache 103 does not hold the data (miss), the cluster 101 sends a data acquisition request to the cluster 20 which is Home. When the L2 cache control unit 201 in the cluster 20 receives the data acquisition request, the L2 cache control unit 201 checks the directory information of the L2 cache 203. When the controller 201a in the L2 cache control unit 201 determines that the data is not found in the L2 cache 203 and L2 caches in Remote clusters (miss), the controller 201a sends a data acquisition request to the memory 202.

When the L2 cache control unit 201 receives the data from the memory 202, the L2 cache control unit 201 updates the directory information of the L2 cache 203. And the L2 cache control unit 201 sends the data to the cluster 10 which is Local and requesting the data. The L2 cache control unit 101 in the cluster 10 stores the data received from the L2 cache control unit 201 in the cluster 20 in the L2 cache 103. And then the L2 cache control unit 101 sends the data to the processor core requesting the data in the group of processor cores 100.

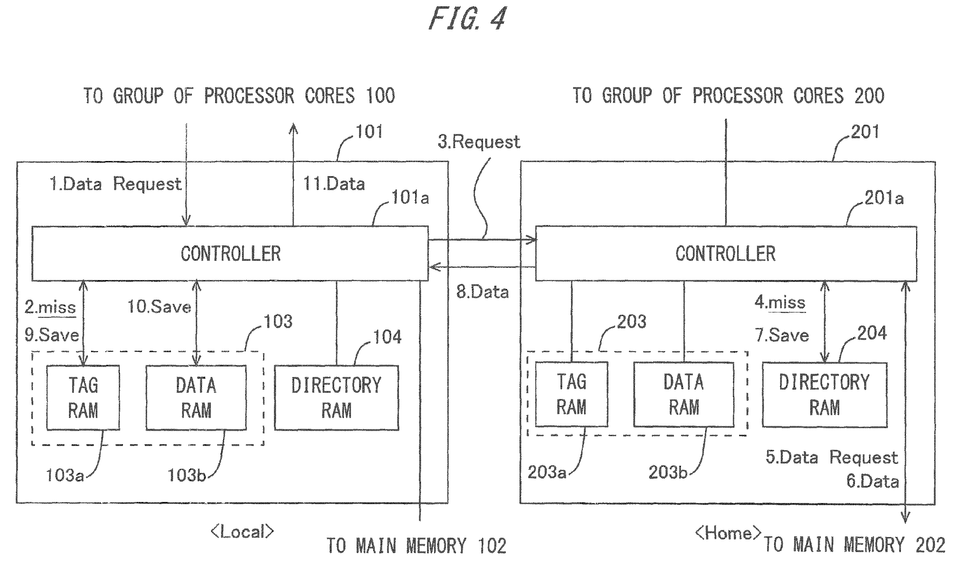

FIG. 4 is a diagram illustrating processes performed in the L2 cache control units 101 and 201 in the process example as illustrated in FIG. 3. The controller 101a in the L2 cache control unit 101 in the cluster 10 which is Local accepts a data acquisition request from an processor core in the group of processor cores 100. The data acquisition request includes the information indicating that the request is generated by the processor core, the type of the data acquisition request and the address in the memory storing the data. The controller 101a initiates appropriate processes according to the contents of the request.

First, the controller 101a checks the tag RAM 103a to determine whether or not a copy of a block of a main memory which stores the data as the target of the data acquisition request is found in the data RAM 103b. When the controller 101a receives a result indicating that the copy is not found (miss) from the tag RAM 103a, the controller 101a sends a data acquisition request of the data to the controller 201a in the L2 cache control unit 201 which belongs to the Home cluster 20.

When the controller 201a receives the data acquisition request, the controller 201a checks whether or not the data as the target of the data acquisition request is an L2 cache in any cluster. When the controller 201a receives a result indicating that "the data is not held by clusters (miss) " from the directory RAM 204, the controller 201a sends a data acquisition request to the memory 202. When the controller 201a receives the data from the memory 202, the controller 101a registers in the directory RAM 204 information indicating that the data is held by the cluster 10 which is requesting the data. In addition, the controller 201a sends the data to the controller 101a in the cluster 10. When the controller 101a in the cluster 10 receives the data, the controller 101a stores information of the status of use of the data ("Shared" etc.) in the tag RAM 103a. Further, the controller 101a stores the data in the data RAM 103b. Moreover, the controller 101a sends the data to the processor core requesting the data in the group of processor cores 100.

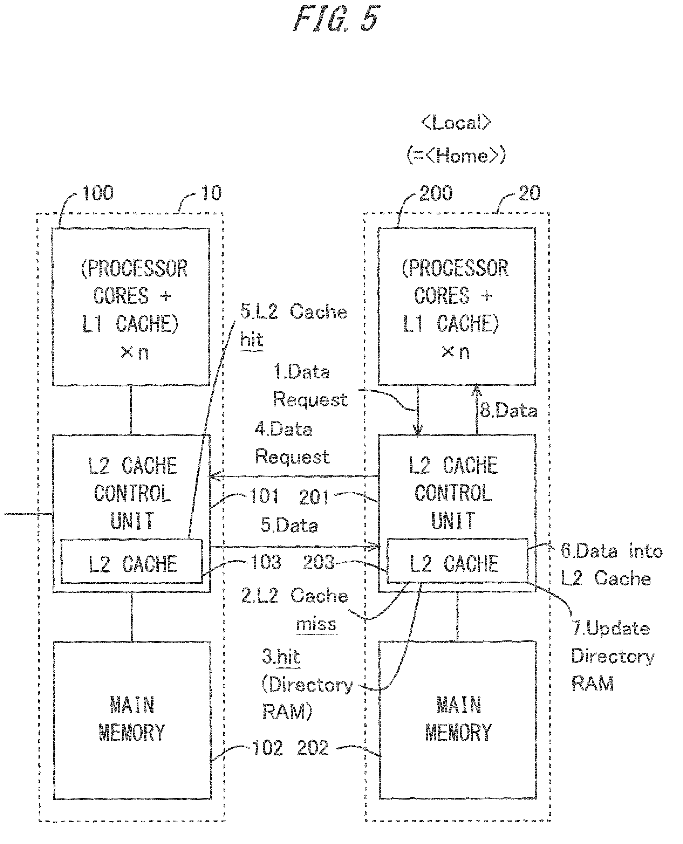

FIG. 5 is a diagram illustrating processes for acquiring data performed in the cluster 20 after the processes as describedabove in FIGS. 3 and 4 are completed in the comparative example. In FIG. 5, the group of processor cores 200 in the cluster 20 requests the data held by the L2 cache 103 in the cluster 10 as described above. In the processes as illustrated in FIG. 5, the cluster 20 is a Local cluster as well as a Home cluster.

As illustrated in FIG. 5, the group of processor cores 200 requests the data from the L2 cache control unit 201. The request includes address information indicating that the requested data is data to be stored in the memory 202 in the cluster 20. The L2 cache control unit 201 determines that the data is not found in the L2 cache 203 (miss) and held by the cluster 10. And the L2 cache control unit 201 sends a data acquisition request of the data to the cluster 10. When the L2 cache control unit 101 in the cluster 10 receives the data acquisition request, the L2 cache control unit 101 determines that the requested data is found in the L2 cache 103. And then the L2 cache control unit 101 acquires the data from the L2 cache 103 and sends the data to the cluster 20.

When the L2 cache control unit 101 returns the data to the L2 cache control unit 201, the L2 cache control unit 201 updates the directory information of the L2 cache 203. And the L2 cache control unit 201 stores the data in the L2 cache 203. And then the L2 cache control unit 201 sends the data to the processor core requesting the data in the group of processor cores 200.

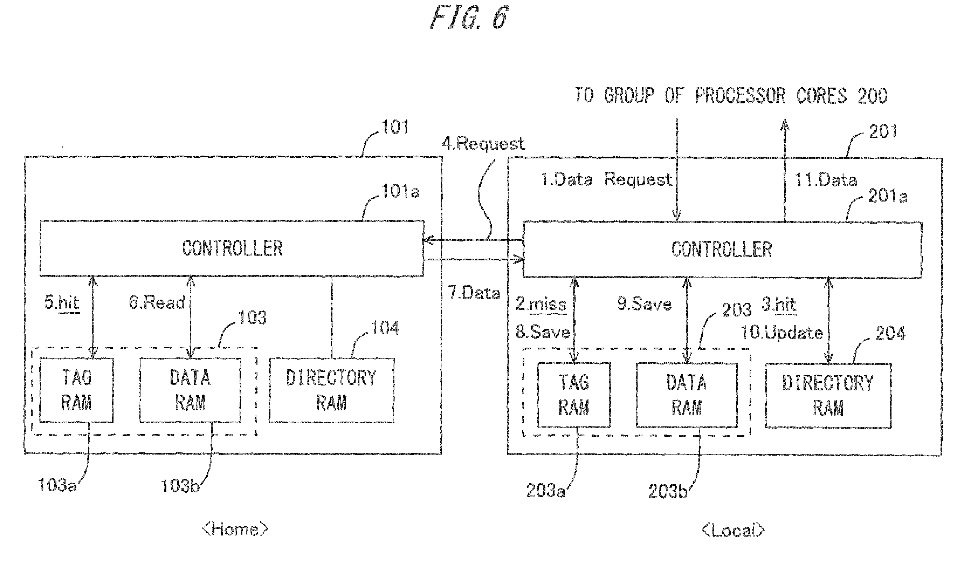

FIG. 6 is a diagram illustrating processes performed by the L2 cache control units 101 and 201 in the example as illustrated in FIG. 5. The controller 201a in the L2 cache control unit 201 accepts a data acquisition request from an processor core in the group of processor cores 200. The controller 201a checks the tag RAM 203a to determine whether or not the data is found in the data RAM 203b. When the controller 201a determines that the data is not found in the data RAM 203b (miss), the controller 201a requests the directory RAM 204 to read the directory information of the data. The controller 201a uses the directory information received from the directory RAM 204 to determine that the data is held by the cluster 10. And the controller 201a sends a data acquisition request of the data to the controller 101a.

When the controller 101a in the cluster 10 which is Home receives the data acquisition request, the controller 101a checks the tag RAM 103a to determine whether or not the data is found in the data RAM 103b. The controller 101a determines that the data is found in the data RAM 103b (hit). Next, the controller 101a acquires the data from the data RAM 103b. And then the controller 101a sends the data to the controller 201a in the L2 cache control unit 201 in the cluster 20.

When the controller 201a acquires the data, the controller 201a requests the tag RAM 203a to update the information stored in the tag RAM 203a to indicate that the data is stored in the data RAM 203b. In addition, the data is stored in the data RAM 103b in the cluster 10. Therefore, the controller 201a also requests the tag RAM 203a to update the information to indicate that the status of use of the data is set to "Shared". After the information in the tag RAM 203a is updated, the controller 201a stored the data in the data RAM 203b. The controller 201a requests the directory RAM 204 to update the directory information to indicate that the data is held by the cluster 20 which is also Local. Next, the controller 201a sends the data to the processor core requesting the data in the group of processor cores 200.

In the above information processing apparatus, the directory information related to the data to be stored in the memory in each cluster is stored along with the data in the memory. And when the data is acquired from the memory, the data and the directory information of the data are acquired in a single data reference process. Therefore, the data and the directory information are stored in a block in the memory. However, in this configuration, when the data is held by a cluster, the directory information stored in the memory is referred in order to acquire the data from the cluster or writing back the data to the memory. Further, the cluster performs a variety of processes after the cluster checks the directory information. As a result, this may lead to performance deterioration, increase of electricity consumption, generation of information regarding the usage of memory bandwidth and the like.

Thus, the directory information is stored in the directory RAM in the L2 cache control unit in the cluster. The directory RAM stores the directory information related to the data acquired from the memory. In addition, the directory information related to each data stored in the memory is stored in the directory RAM in some cases. This configuration is employed when the amount of directory information is small and the directory information of each data can be stored in the L2 cache control unit, that is, when the number of clusters is small or when the memory capacity is small for example.

Thus, the whole or a part of the directory information is stored in the directory RAM in the information processing apparatus 1 in the comparative example as described above. In this case, the cluster determines the details of each process including the data acquisition request after the cluster refers to the directory RAM. For example, when a data acquisition request is generated, the cluster refers to the directory RAM to determine that the status of the data falls under "directory cache miss" or that the data is not held by L2 caches in Remote clusters. The cluster sends a data acquisition request to the memory or other clusters after the determination. Therefore, latency related to the data acquisition occurs due to the processes for referring to the directory RAM and the electricity consumption are increased.

Further, coordination is employed regarding the data used by the group of processor cores in each cluster in order to improve the effective performance of each application executed in the information processing apparatus 1 in some cases. That is, for clusters executing an application in the information processing apparatus 1, the group of processor cores in each cluster uses data stored in the memory in the cluster to which the group of processor cores belongs and does not use data stored in the memories in the other clusters. Therefore, the data stored in the memory in each cluster is not acquired by the other clusters. However, even when such coordination is introduced in the comparative example, the directory RAM is referred when data is acquired. As a result, the performance of the information processing apparatus 1 may decrease due to the processes for referring to the directory RAM and the latency related to the data acquisition persistently occurs and the electricity consumption may increase.

With the above in mind as described in the comparative example, the details of information processing apparatus according to one embodiment are described below with reference to the drawings.

### (Embodiment)

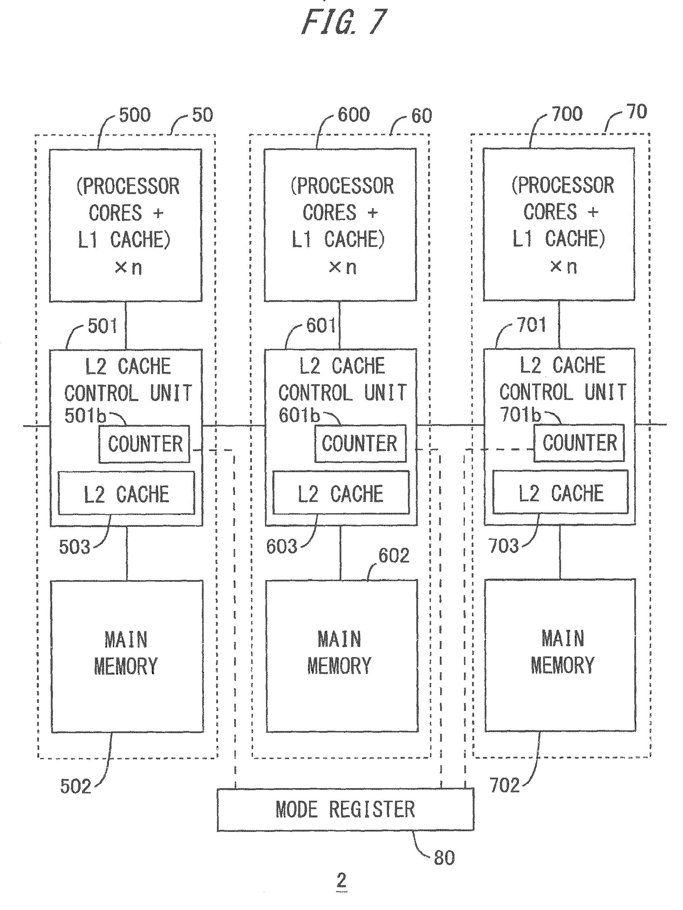

FIG. 7 schematically illustrates a part of a cluster configuration in an information processing apparatus 2 in the present embodiment. As illustrated in FIG. 7, similar to the comparative example, the information processing apparatus 2 includes clusters 50, 60 and 70. The clusters 50, 60 and 70 correspond to examples of operation processing apparatus. In addition, since the differences between Local, Home and Remote are similar to the comparative example as described above, the descriptions of Local, Home and Remote are omitted here. The cluster 50 includes a group of processor cores 500, an L2 cache control unit 501 and a main memory 502. The L2 cache control unit 501 includes an L2 cache 503. The clusters 60 and 70 also include groups of processor cores 600 and 700, L2 cache control units 601 and 701, memories 602 and 702 and L2 caches 603 and 703 respectively. The groups of processor cores 500, 600 and 700 correspond to examples of operation processing units. In addition, the L2 cache control units 501, 601 and 701 correspond to examples of control units. Further, the memories 502, 602 and 702 correspond to examples of data storage units.

In addition, as illustrated in FIG. 7, the information processing apparatus 2 includes a mode register 80. As described below, the L2 cache control units 501, 601 and 701 include counters 501b, 601b and 701b, respectively. Further, the mode register 80 controls countering processes of each counter. It is noted that the mode register 80 is an example of setting unit. Additionally, the counters 501b, 601b and 701b correspond to examples of indication units.

As illustrated in FIG. 7, an L2 cache controller in each cluster is connected with each other via a bus or an interconnect. In the information processing apparatus 2, the memory space is so-called flat so that it is uniquely determined according to physical addresses which data is stored and in which cluster the data is stored in a main memory.

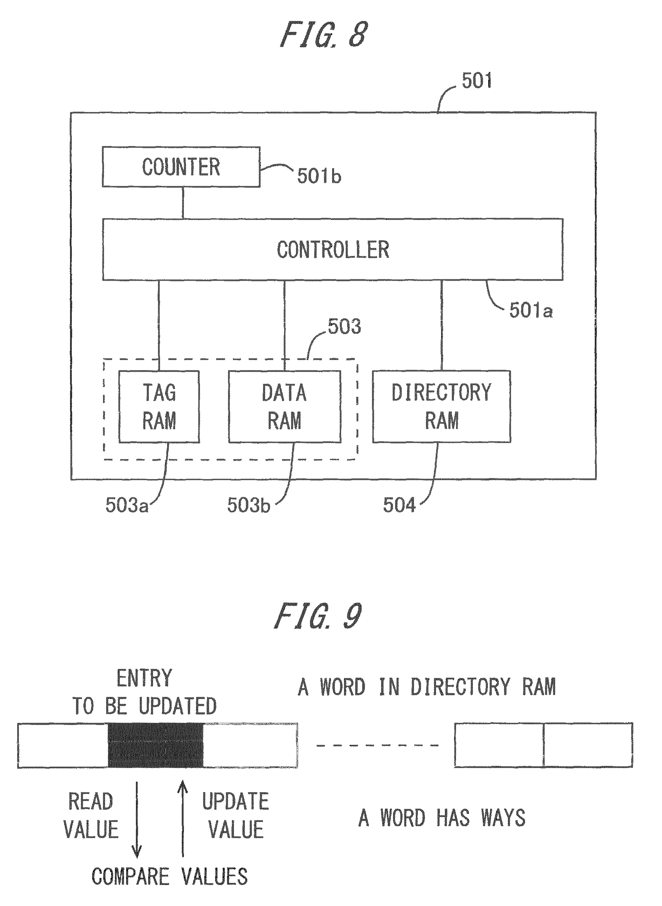

FIG. 8 is a diagram illustrating the L2 cache control unit 501 in the cluster 50. The L2 cache control unit 501 includes a controller 501a, a counter 501b, the L2 cache 503 and a directory RAM 504. In addition, the L2 cache 503 includes a tag RAM 503a and a data RAM 503b. Further, the directory RAM corresponds to an example of a data usage storage unit. Since the functions of the tag RAM 503a, the data RAM 503b and the directory RAM 504 are similar to the comparative example, the detailed descriptions are omitted here.

The counter 501b counts the number of blocks in which data is held by other clusters for the blocks in the memory which is administered by entries stored in the directory RAM 504 in the cluster 50. For example, when the number of entries of the directory RAM 504 is 2^N (N is integer), the number of bits of the counter 501b is N+1. It is assumed here that the value of the counter 501b is 0 when the cluster 50 performs processes of accessing to the memory 503 in the cluster 50 itself. This value means that "an entry indicating that data is held by another (Remote) cluster is not found" in the directory RAM 504. Therefore, in the cluster 50, processes for referring to the directory RAM 504 are omitted and a data acquisition request is sent to the memory 502.

The mode register 80 controls the operation mode of each cluster in the information processing apparatus 2 according to the present embodiment. In the present embodiment, the operation mode includes two modes which are "mode on" and "mode off". The operation mode "mode on" is an operation mode in which the counter in the cluster is enabled. The operation mode "mode off" is an operation mode in which the operation of the counter in the cluster is disabled. The details of the processes in these operation modes are described later. In the present embodiment, the operation modes are switched before application execution or OS (Operating System) booting in the information processing apparatus 2 in the present embodiment. In addition, the OS of the information processing apparatus 2 controls the switching of the operation modes of the mode register 80. It is noted that the switching of the operation modes canbe performed by a user of the information processing apparatus 2 to explicitly instruct the OS or by the OS to autonomously instruct according to the information such as the memory usage of the application.

The value of the counter may constantly be more than or equal to 1 when an application is executed and the amount of communications between clusters increases in the information processing apparatus 2. In this case, the electricity consumption also increases according to the operations of the counter. In addition, since processes for referring to the directory RAM are not omitted, the latency and the electricity consumption associated with processes for acquiring data cannot bedecreased. Thus, the mode register 80 is provided for enabling and disabling the counter in the present embodiment. When the mode register 80 disables the operation of the counter, the operation mode is set to "mode off" and the cluster in which the counter is disabled operates as described in the comparative example.

The controller performs the increment or decrement of the counter when the directory information in the directory RAM is updated in the present embodiment. That is, when the controller requests the directory RAM to update the directory information of an entry, the controller reads the entry from the directory RAM and then requests the update process of the entry. And the controller performs the increment or decrement of the counter according to the state transition of the entry.

For example, it is assumed that directory information in the directory RAM indicates that data corresponding to an entry to be updated is not held by other (Remote) clusters. In this case, the controller performs the increment of the counter when the status of the entry indicated by the directory information is changed from the status in which the data corresponding to the entry is not held by the other cluster (s) to the status in which the data corresponding to the entry is held by the other cluster (s). On the other hand, the controller performs the decrement of the counter when the status of the entry indicated by the directory information is changed from the status in which the data corresponding to the entry is held by the other cluster(s) to the status in which the data corresponding to the entry is not held by the other cluster(s). That is, the controller performs the decrement of the counter in the case in which the data corresponding to the entry is held by a (Remote) cluster the data is returned from the cluster, namely, the holding status of the data is invalidated. It is noted that when a data acquisition request is sent to the cluster of which the operation mode is "mode on" and in which the value of the counter is 0, the processes for referring to the directory RAM are omitted.

FIG. 9 is a diagram schematically illustrating processes performed when the increment or decrement of the counter is performed in the example of the present embodiment. FIG. 9 illustrates a cache line corresponding to an index stored in the directory RAM. The cache line includes an entry to be updated.

The directory information in the directory RAM indicates whether or not each cluster in the information processing apparatus holds data stored in the memory 502. Specifically, the tag RAM in each cluster stores four type codes "Modified", "Exclusive", "Shared" and "Invalid" for each data acquired from other clusters. Therefore, the directory RAM 504 stores a type code for each data to be stored in the memory 502 on the basis of a type code etc. stored in the tag RAM in the cluster which acquires the data. For example, it is assumed that the information processing apparatus 2 includes the clusters 50, 60 and 70. In this configuration, the clusters 60 and 70 are Remote clusters for the cluster 50.

For example, when the cluster 70 acquires data stored in the memory 502 from the cluster 50, the directory RAM 504 stores information indicating that the data is heldby the cluster 70 which is Remote. When the cluster 70 exclusively acquires the data, the type code information for the data stored in the directory RAM 504 is "Exclusive". In addition, when the data is not exclusively acquired by the cluster 70, the type code information for the data stored in the directory RAM 504 is "Shared". Further, when the content of the data held by the cluster 70 is changed, "Modified" is stored as the type code information in the directory RAM 504. That is, while data stored in the memory 502 is held by another cluster, the type code information stored in the directory RAM 504 in the clusterholding the data is other than "Invalid". Moreover, when the data is returned from the cluster 70 to the cluster 50, "Invalid" is stored as the type code information in the directory RAM 504.

Thus, in the present embodiment, when data stored in a main memory in a cluster is acquired or returned, the updating processes of a directory RAM in the cluster are performed. When the directory RAM is updated, the controller reads the data indicating the status of the entry corresponding to the data before the update processes from the directory RAM. And the controller compares the value of the read entry, namely, the status of the entry before the update processes, with the status of the entry after the update processes. The controller performs the increment or the decrement of the value of the counter based on the comparison.

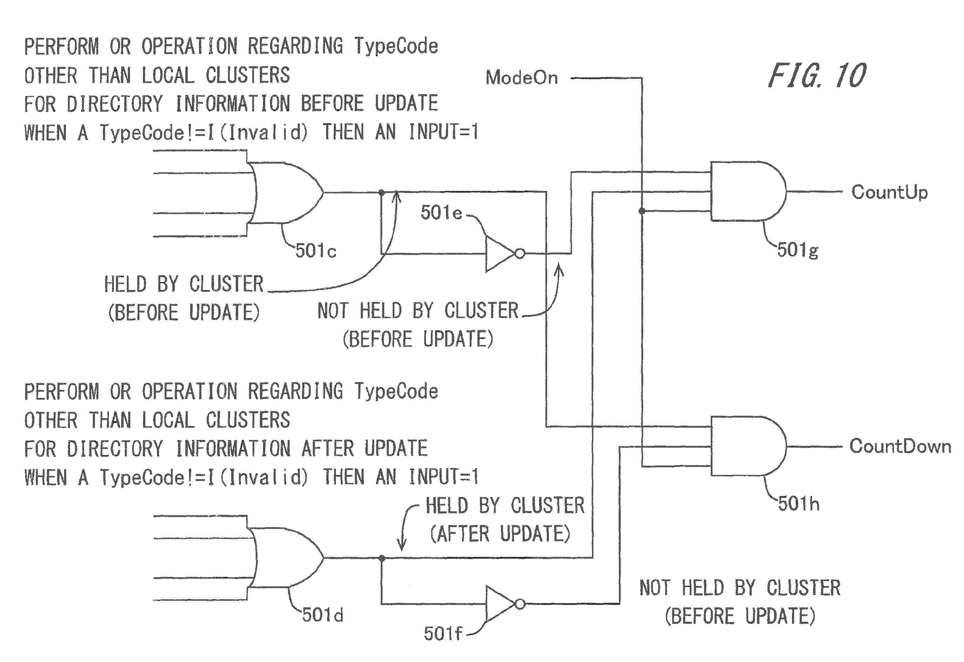

FIG. 10 is a diagram illustrating a part of a circuit included in the controller 501a in the present embodiment. In the present embodiment, each of the controllers 501a, 601a and 701a includes the logical circuit as illustrated in FIG. 10. The controller 501a uses the control circuit in FIG. 10 to perform the increment or the decrement of the counter 501b. In FIG. 10, an OR gate 501c performs OR operations based on the type codes for the clusters other than Local clusters in regard to the directory information of the entries to be updated in the L2 cache 503. The OR operations determine whether or not the status of use of the data corresponding to the entries before the directory information is updated indicate that the data is held by clusters other than the cluster 50.

A type code corresponding to each cluster other than Local clusters stored in the directory information before updated is input into the OR gate 501c. And the OR gate 501c outputs "1" when at least one input satisfies "TypeCode!=I(Invalid)", that is, when the type code of the input is not "Invalid". In addition, the OR gate 501c outputs "0" in other cases, that is, when the type codes of the inputs are "Invalid".

Additionally, an OR gate 501d performs OR operations based on the type codes in regard to the directory information of the entries in the L2 cache 503 after the entries are updated. The OR operations determine whether or not the status of use of the data corresponding to the entries after the directory information is updated indicate that the data is held by clusters other than the cluster 50. A type code corresponding to each cluster other than Local clusters stored in the directory information after updated is input into the OR gate 501d. And the OR gate 501d outputs "1" when at least one input satisfies "TypeCode!=I(Invalid)". In addition, the OR gate 501d outputs "0" in other cases.

The AND gate 501g outputs an instruction signal CountUp when the mode register sets the operation mode of the cluster to "mode on", the inverter 501e inverts the output signal from the OR gate 501c and the OR gate 501d outputs "1". The counter 501b performs the increment of the current value according to the instruction signal. As described above, "mode on" here means that the operation of the counter 501b is enabled by the mode register 80. In addition, the AND gate 501h outputs an instruction CountDown when the mode register sets the operation mode of the cluster to "mode on", the OR gate 501c outputs "1" and the inverter 501f inverts the output signal from the OR gate 501d. The counter 501b performs the decrement of the current value according to the instruction signal.

As illustrated in FIG. 10, the OR gate 501c outputs "1" and the output signal is input into the AND gate 501h when the status of an entry in the directory RAM 504 before updated indicates that the data corresponding to the entry is held by another cluster. In this case, since the inverter 501e inverts the output signal from the OR gate 501c, "0" is input into the AND gate 501g. On the other hand, the OR gate 501c outputs "0" and the output signal is input into the AND gate 501h when the status of an entry in the directory RAM 504 before updated indicates that the data corresponding to the entry is not held by other clusters. In this case, "1" is input into the AND gate 501g.

Further, the OR gate 501d outputs "1" and the output signal is input into the AND gate 501g when the status of an entry in the directory RAM 504 after updated indicates that the data corresponding to the entry is held by another cluster. In this case, since the inverter 501f inverts the output signal from the OR gate 501d, "0" is input into the AND gate 501h. On the other hand, the OR gate 501d outputs "0" and the output signal is input into the AND gate 501g when the status of an entry in the directory RAM 504 after updated indicates that the data corresponding to the entry is not held by other clusters. In this case, "1" is input into the AND gate 501h.

It is assumed as an example that the controller 501a sends data stored in the memory 502 to the cluster 70. Here, the data has not been held by other clusters, that is, the data is stored in the memory 502 or the data RAM 503b. In addition, it is assumed that the mode register 80 sets the operation mode of the cluster to "mode on", that is, the operation of the counter 501b is enabled. The controller 501a acquires the data from the memory 502 or the data RAM 503b. And the controller 501a requests the directory RAM 504 to update the directory information to indicate that the data is held by the cluster 70 which is Remote. Specifically, the controller 501a requests the directory RAM 504 to update the directory information according to whether the data acquisition request from the cluster 70 is exclusive or not to indicate that the status of use of the data is "Exclusive" or "Shared".

Before the directory information is updated, the directory information regarding the data in the directory RAM 504 indicates that the data is not held by other clusters. That is, the type code for each Remote cluster in regard to the data is "Invalid". Thus, the OR gate 501c outputs "0". On the other hand, after the directory information is updated, the directory information regarding the data indicates that the data is held by the cluster 70 which is Remote. That is, the type code for the cluster 70 which is Remote in regard to the data is "Shared" or "Exclusive". Thus, the OR gate 501d outputs "1".

As a result, "1" is input into the AND gate 501g from the inverter 501e and the OR gate 501d. In addition, the mode register 80 sets the operation mode of the cluster 50 to "mode on" to enable the operation of the counter 501b. Therefore, the AND gate 501g outputs an instruction signal CountUp. And the increment of the value of the conter 501b is performed according to the instruction signal CountUp. On the other hand, "0" is input into the AND gate 501h from the OR gate 501c and the inverter 501f. Thus, the AND gate 501h does not output an instruction signal CountDown.

Next, it is assumed that the data is returned from the cluster 70 to the cluster 50. It is assumed that the mode register 80 sets the operation mode of the cluster "mode on" to enable the operation of the counter 501b. The controller 501a receives the data from the cluster 70 and requests the directory RAM 504 to update the directory information to indicate that the data is not held by the cluster 70 which is Remote. That is, the controller 501a requests the directory RAM 504 to set the type code of the data for the cluster 70 to "Invalid".

Before the directory information is updated, the directory information in the directory RAM 504 indicates that the data is held by the cluster 70. That is, the type code for the cluster 70 in regard to the data is a value other than "Invalid". Therefore, the OR gate 501c outputs "1". On the other hand, the directory information after updated indicates that the data is not held by other clusters. That is, the type codes for the Remote clusters in regard to the data are "Invalid". Therefore, the OR gate 501d outputs "0".

As a result, "1" is input into the AND gate 501h from the OR gate 501c and the inverter 501f. In addition, the mode register 80 sets the operation mode of the cluster 50 to "mode on" to enable the operation of the counter 501b. Therefore, the AND gate 501h outputs "1", which means an instruction signal CountDown. And the decrement of the value of the counter 501b is performed according to the instruction signal CountDown. On the other hand, "0" is input into the AND gate 501g from the inverter 501e and the OR gate 501d. Therefore, the AND gate 501g outputs "0", which means an instruction signal CountUp.

As described above, the control circuit as illustrated in FIG. 10 compares the status of the entry in the directory RAM 504 before the update processes with the status after the update processes and performs the increment or the decrement of the value of the counter 501b.

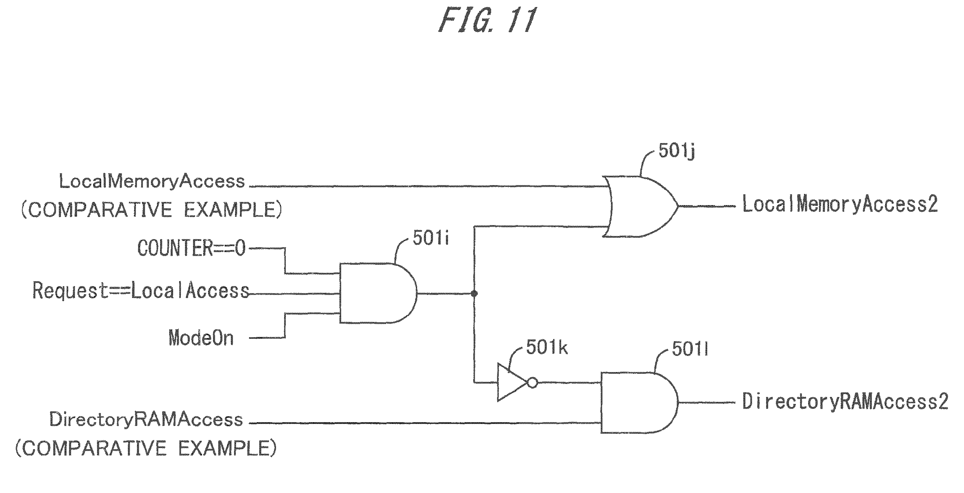

Next, FIG. 11 illustrates a logical circuit which skips processes for referring to the directory RAM and performs processes for referring to the memory when the value of the counter is "0". In the present embodiment, the controllers 501a, 601a and 701a includes the logical circuits, respectively.

In FIG. 11, the AND gate 501i outputs "1" when the mode register 80 sets the operation mode of the cluster 50 to "mode on" to enable the operation of the counter 501b, the value of the counter 501b is "0" and an Local data acquisition request to the cluster 50 occurs. As described above, the operation mode "mode on" means that the mode register enables the operation of the counter 501b. Signals output from the AND gate 501i are input into the OR gate 501j. In addition, the output signals from the AND gate 501i are inverted by the inverter 501k and input into the AND gate 5011. The OR gate 501j outputs an instruction signal LocalMemoryAccess2 for performing an access to the memory 502 when the AND gate 501i outputs "1". In addition, the OR gate 501j also outputs an instruction signal LocalMemoryAccess2 for performing an access to the memory 502 when an access to the memory 502 is performed as described in the comparative example.

The AND gate 5011 outputs an instruction signal DirectoryRAMAccess2 for performing an access to the directory RAM 504 when the AND gate 501i outputs "0" and an access to the directory RAM 504 is performed as described in the comparative example. Therefore, in the present embodiment, when the operation mode of the cluster is set to "mode off", an access to the directory RAM 504 and an access to the memory 502 are performed as described in the comparative example. In addition, when the operation mode of the cluster 50 is set to "mode on", an access to the directory RAM 504 is not performed in a case in which a Local data acquisition request to the cluster 50 occurs and the value of the counter 501b is "0". And then an access to the memory 502 is performed and the requested data is acquired from the memory 502.

It is noted that when data to be stored in the memory is stored in the L2 cache in the Local cluster and the data is requested from the group of processor cores in the cluster, cache hit occurs in the L2 cache. Therefore, the data is acquired from the L2 cache and sent to the group of processor cores. Thus, when cache miss occurs in the L2 cache and the value of the counter is "0", a situation in which the data is not found other than in the L2 cache does not occur.

Additionally, as described above, the controller performs the increment or the decrement of the counter when the directory RAM is updated in the present embodiment. In the above comparative example, the controller reads the entry to be updated and checks the directory information of the entry in order to determine the protocol validity etc. when the directory RAM is updated. Therefore, when the configuration of the counter in the present embodiment is employed, the number of references to the directory RAM does not increase compared to the comparative example.

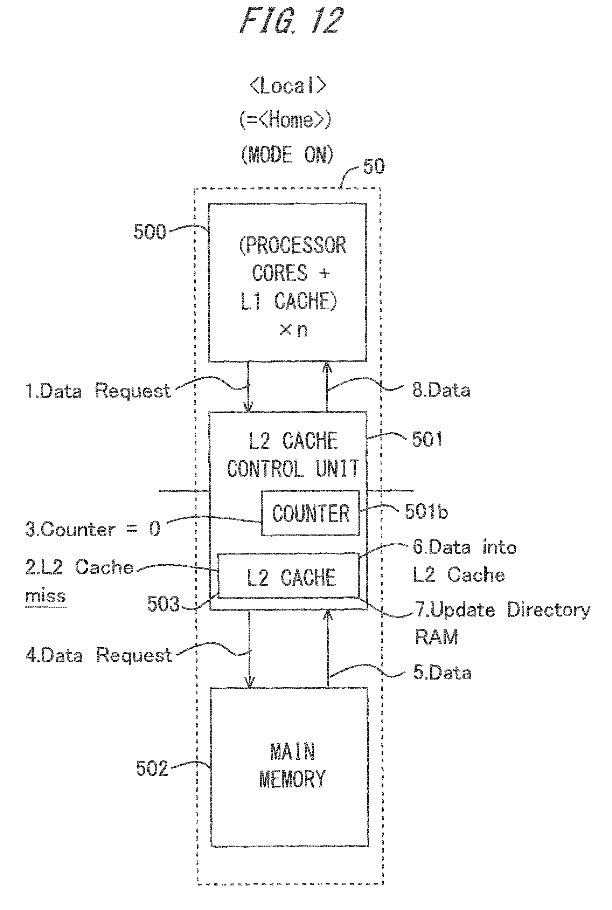

Next, FIG. 12 is a diagram exemplifying processes performed when the cluster 50 acquires data in the present embodiment. FIG. 12 illustrates processes performed when the value of the counter 501b is "0" and L2 cache miss. That is, in FIG. 12, data to be stored in the memory 502 is not stored in the data RAM 503b nor held by other clusters. Therefore, the data is stored in the memory 502. It is noted that, similar to the above comparative example, when the value of the counter 501b is not "0" the directory information stored in the directory RAM 504 is referred to perform a variety of processes. In addition, the mode register 80 sets the operation mode of the cluster 50 to "mode on", that is, the operation of the counter 501b is enabled in FIG. 12. When the operation mode is set to "mode off", the operation of the counter 501b is disabled and the cluster 50 performs processes as described in the comparative example.

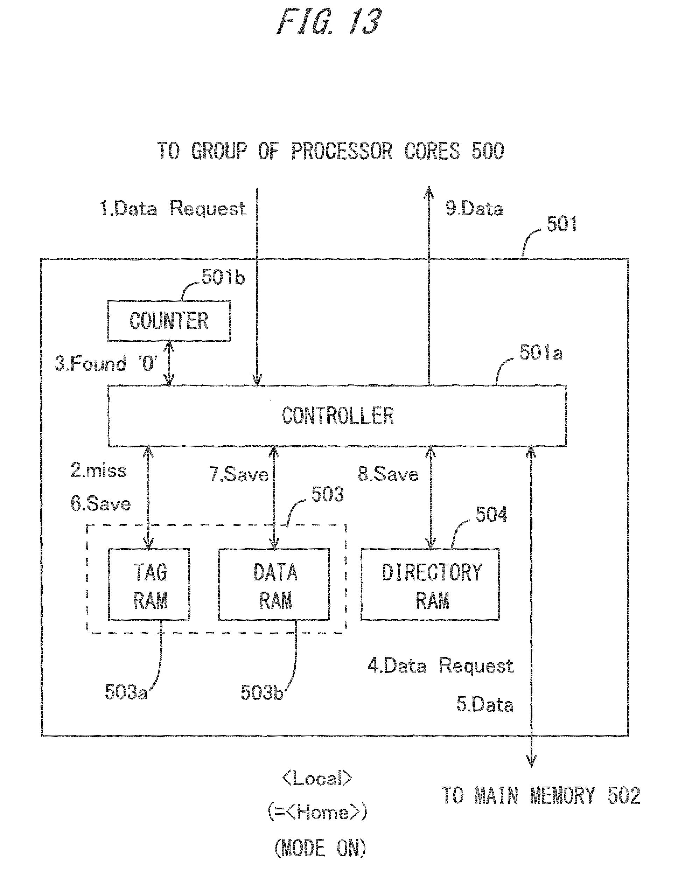

FIG. 13 is a diagram illustrating processes performed by the L2 cache control unit 501 in the example as illustrated in FIG. 12. As described above, the L2 cache control unit 501 includes the controller 501a, the counter 501b, the L2 cache 503, the L2 cache 503 and the directory RAM 504. In addition, the L2 cache 503 includes the tag RAM 503a and the data RAM 503b.

AsillustratedinFIG. 13, the controller 501a receives a data acquisition request for the data to be stored in the memory 502 from the group of processor cores 500 in the cluster 50. Next, the controller 501a refers to the tag RAM 503a to determine whether or not the requested data is stored in the data RAM 503b. When the controller 501a determines that the data is not found in the data RAM 503b (cache miss), the controller 501a checks the value of the counter 501b. When the controller 501a determines that the value of the counter 501b is "0", the processes for referring to the directory RAM 504 are skipped according to the operation of the control circuit as illustrated in FIG. 11. And the controller 501a acquires the requested data from the memory 502. When the controller 501a acquired the data from the memory 502, the controller 501a requests the directory RAM 504 to register the information indicating that the data is held by the cluster 50. Further, the controller 501a also requests the data RAM 503a to register the information indicating that the data is stored in the data RAM 503b. Moreover, the controller 501a stores the data in the data RAM 503b. And then the controller 501a sends the data acquired from the memory 502 to the group of processor cores 500.

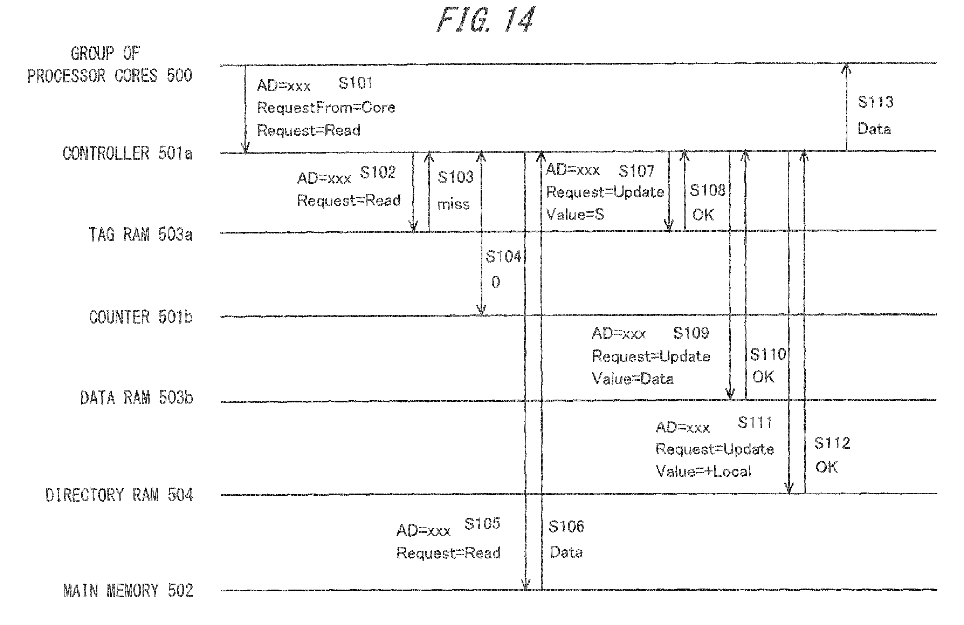

FIG. 14 is a timing chart of the L2 cache control unit 501 in the process examples as illustrated in FIGS. 12 and 13. In the following descriptions, a step in the timing chart is abbreviated to S. In S101, the controller 501a receives a data acquisition request for data stored in the memory 502 from the group of processor cores 500. The data acquisition request includes an address indicating where the requested data is stored in the memory 502. In S102, the controller 501a requests the tag RAM 503a to check whether or not the data stored in the address is found in the data RAM 503b. In S103, the tag RAM 503a notifies the controller 501a that the data is not found in the data RAM 503b (miss).

Next, in S104, the controller 501a checks the value of the counter 501b. Since the counter 501b is "0" in this case, there is not an entry in the directory RAM 504 indicating that the data is held by another cluster. Thus, the controller 501a does not check the directory information in the directory RAM 504 for the acquisition of the data. Then the controller 501a skips the processes for referring to the directory RAM 504 and sends a data acquisition request for the data to the memory 502.

In S105, the controller 501a requests the data from the memory 502 according to the operation of the control circuit as illustrated in FIG. 11. In S106, the memory 502 sends the requested data to the controller 501a. In S107, the controller 501a requests the tag RAM 503a to update the information in the tag RAM 503a to indicate that the data is stored in the data RAM 503b. In addition, the controller 501a also requests the tag RAM 503a to update the information to indicate that the status of use of the data is "Shared". In S108, the tag RAM 503a updates the information according to the request from the controller 501a and notifies the controller 501a that the update process is completed.

In S109, the controller 501a sends the data acquired from the memory in S105 to the data RAM 503b and requests the data RAM 503b to store the data. In S110, the data RAM 503b stores the data and notifies the controller 501a that the storage process is completed. In S111, the controller 501a requests the directory RAM 504 to update the directory information to indicate that the data is held by the cluster 50 (Value=+Local). As described above, cache miss occurs in regard to the data in S103. Further, the value of the counter 501b in S105 is "0". This means that the data is not held by other clusters. Thus, an entry indicating the directory information of the data is added to the directory RAM 504. In S112, the directory RAM 504 updates the directory information according to the request from the controller 501a and notifies the controller 501a that the update process is completed. In S113, the controller 501a sends the data to the group of processor cores 500.

As described above, since the value of the counter 501b is "0" in the present embodiment, there is not an entry in the directory RAM 504 indicating that the data is held by other cluster. Further, it is determined that the data is not found in the data RAM 503b. That is, the data is not stored other than in the memory 502. In this case in the present embodiment, the controller 501a skips the processes for referring to the directory RAM 504 and accesses to the memory 502. Thus, the latency and the electricity consumption associated with the processes for accessing to the memory 502 and can be reduced.

Moreover, the number of bits used for counting the value of the counter 501b can be at most dozens of bits. That is, the capacity used for the counter 501b can be configured to be smaller than the capacity of the directory RAM 504. Thus, the amount of information processed when the value of the counter 501b is checked can be smaller than the amount of information processes when the directory RAM 504 is checked. In addition, the electricity consumption increased by using the counter 501b can be much smaller than the electricity consumption decreased by skipping the processes for referring to the directory RAM 504.

Additionally, when an application executed in the information processing apparatus 2 is controlled not to perform communications between clusters as far as possible, the frequency for the data stored in the memory to be acquired by other clusters can be reduced. Therefore, the chances that the value of the counter is "0" are increased. Thus, the number of skipping of the processes for referring to the directory RAM is increased. As a result, the latency and the electricity consumption associated with the access to the memory are reduced and the performance of the information processing apparatus 2 can be improved. For example, in the information processing apparatus 2, an application can be configured to have one phase in which each cluster uses data stored in the memory in the cluster itself and the otherphase inwhich each cluster performs communications with other clusters. In this configuration, the above advantages can be obtained particularly in the phase in which each cluster uses data stored in the cluster itself.

The directory RAM administers the type codes for the clusters in regard to the data stored in the memory or the data RAM by using bits corresponding to the clusters in the present embodiment. For example, four type codes "Modified", "Exclusive", "Shared" and "Invalid" are used in the above descriptions. In this case, four types of bits "11", "10", "01" and "00" can be respectively allocated to the type codes "Modified", "Exclusive", "Shared" and "Invalid" as an example. These bits can be used to administer the status of each data regarding whether or not the data is held by other clusters. However, the configuration for using the directory RAM to administer the status of each data is not limited to the above configuration.

Although the present embodiment is described as above, the configurations and the processes of the information processing apparatus are not limited to those as described above and various variations may be made to the embodiment described herein within the technical scope of the present invention. For example, in the above embodiment, the mode register 80 is provided outside the clusters 50, 60 and 70. However, a mode register can be provided in each cluster. In addition, it is assumed in the above embodiment that the directory RAM in the L2 cache control unit stores the directory information of the data stored in the memory. However, the embodiment can be applied to other cases. For example, the configurations in the above embodiment can be employed in a case in which the memory stores the directory information and cache of the directory information is retained in the directory RAM.

Further, the information processing apparatus 2 as described above does not have mode registers 80 in some cases. For example, when an application in which communications between clusters are performed less often compared to other applications is executed in the information processing apparatus 2, it can be said that data stored in the memory is acquired from other clusters less often compared to other applications. When the information processing apparatus often executes such applications, mode registers 80 can be omitted in such configurations. When mode registers 80 are not provided in the information processing apparatus, the controller can determine according to the value of the counter whether or not the directory RAM is referred.

Moreover, methods of maintaining the number of bits used as small as possible include a method of controlling the controller to count a plurality of entries in the directory RAM as one unit. Specifically, when a status in which the data corresponding to the plurality of entries are not held by other clusters changes into a status in which the data corresponding to one entryof the pluralityof entries is heldby another cluster, the controller performs the increment of the counter. And a status in which the data corresponding to at least one entry of the plurality of entries is held by another cluster changes into a status in which the data corresponding to the plurality of entries are not held by other cluster, the controller performs the decrement of the counter. It is noted that when a group of entries as the target of data acquisition is configured to correspond to the unit of the plurality of entries in the countering process the controller can effectively control the countering process.

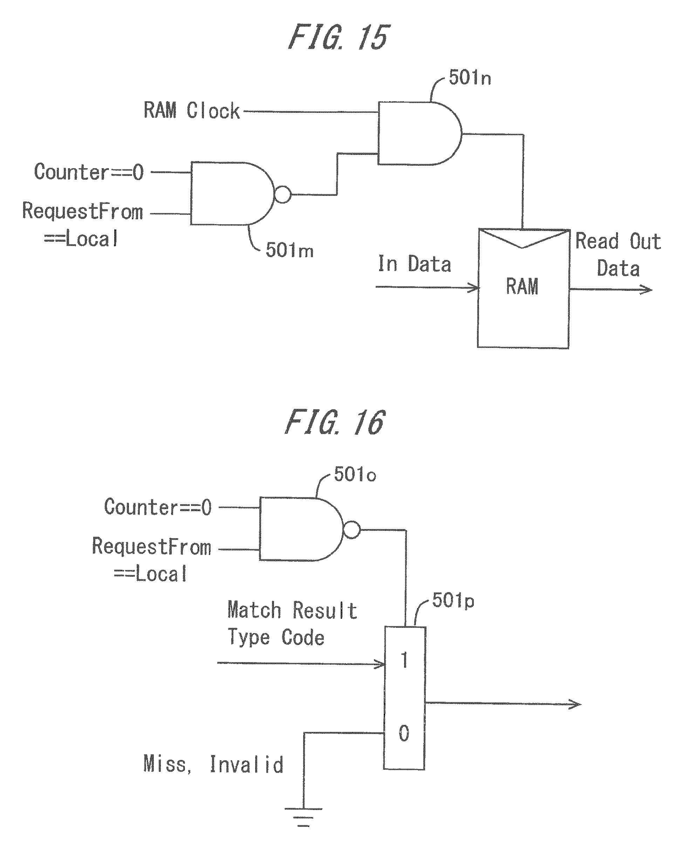

Additionally, methods of skipping the processes for referring to the directory RAM include a method of withholding the controller fromproviding clocks for the directory RAM. FIG. 15 is a diagram illustrating an example of a control circuit which can be added to the controller 501a in the above embodiment. As illustrated in FIG. 15, an NAND gate 501m outputs "0" when the value of the counter is "0" (Counter==0) and the group of processor cores requests data (RequestFrom==Local). It is noted that the request is from the core group which is in the same cluster as the one in which the controller is included. Thus, even when a clock for the directory RAM 504 is generated, the AND gate 501n outputs "0" and then the clock is not provided for the directory RAM 504. It is noted that in cases other than described above the NAND gate 501m outputs "1" and then the clock is provided for the directory RAM 504. In addition, the clock corresponds to an example of a predetermined signal. Further, the NAND gate 501m and the AND gate 501n correspond to examples of signal processing units.

Alternatively, a method of using an Enable signal output from the directory RAM 504 can be employed. That is, a selector can be used in the above embodiment when the controller 501a is configured to determine operations after the controller 501a checks the result of the processes for referring to the directory RAM 504. A control circuit as illustrated in FIG. 16 can be provided in the directory RAM 504 for example. An NAND gate 501o outputs "0" when the value of the counter is "0" (Counter==0) and the group of processor cores requests data (RequestFrom==Local). In addition, a selector 501p returns a result indicating "Invalid" to the controller 501a when the NAND gate 501o outputs "0". It is noted that the "Invalid" also means "Miss" in this case. This result means in effect that the directory information regarding the requested data is not found in the directory RAM 504. And the controller 501a requests the data from the memory 502 when the controller 501a receives the result. Thus, the controller 501a skips the processes for referring to the directory information stored in the directory RAM 504 and acquires the data from the memory 502. It is noted that the NAND gate 501o and the selector 501p correspond to examples of notifying units configured to notify the status of use of data.

As described above, when the control circuits as illustrated in FIGS. 15 and 16 are employed in a cluster, the processes for referring to the directory RAM 504 can be skipped as in the above embodiment.

Moreover, when communications between clusters frequently occur in the information processing apparatus, the value of the counter may rarely become "0" in a configuration in which one counter is provided for one directory RAM. In this case, a plurality of counters can be provided for one directory RAM. For example, in High Performance Computing (HPC) and the like, data used within a cluster and data used for communications between clusters are specifically separated in some cases. In such cases, the information regarding the former data is allocated to the first-half of the address range of the physical memory space of the directory RAM according to the coordination of the OS etc. in the information processing apparatus. In addition, the information regarding the latter data is allocated to the second-half of the address range of the physical memory space of the directory RAM. Further, a counter is provided for each of the first-half part and the second-half part of the physical address range. In such configurations, the probability in which the value of the first-half counter becomes "0" when the data is used within the cluster can be increased in comparison to the configuration in which one counter is provided for one directory RAM.

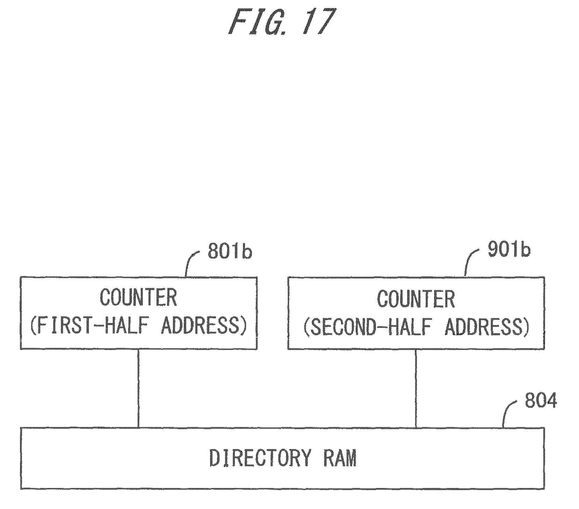

FIG. 17 illustrates a configuration in which two counters 801b and 901b are provided for one directory RAM 804. The directory RAM 804 includes an area for administering the directory information of the first-half part (first-half address) of the physical address space of a main memory (not illustrated) in the cluster (not illustrated) to which the directory RAM 804 belongs. In addition, the directory RAM 804 also includes an area for administering the directory information of the second-half part (second-half address) of the physical address space of the memory. Further, a controller (not illustrated) in the cluster controls the counter 801b to perform counting processes for the directory information corresponding to the first-half address of the directory RAM 804 as described above. Moreover, the controller controls the counter 901b to perform countering processes for the directory information corresponding to the second-half address of the directory RAM 804. Since the increment and the decrement of the values of the counters 801b and 901b are as described in the above embodiment, the detailed descriptions are omitted here.

It is assumed here that a data acquisition request occurs for data stored in the first-half part of the physical address space of the memory. In this case, the controller in the cluster checks the value of the counter 801b. And the controller skips the processes for referring to the directory RAM 804 as in the above embodiment and acquires the data from the memory when the value of the counter 801b is "0". Therefore, the processes for referring to the directory RAM 804 are skipped even when the value of the counter 901b is not "0" in this configuration. Thus, the frequency of skipping the processes for referring to the directory RAM 804 is increased compared to the above embodiment.

It is noted that the above embodiment aims at skipping the processes for referring to the directory RAM. However, the above configurations can also be employed in a case in which each cluster does not include a directory RAM, the directory information is stored in a main memory instead of a directory RAM and data and the directory information of the data are stored in different entries. That is, in such case, a counter as described above is provided for the memory and the counter is controlled as described above when a controller refers to the directory information stored in the memory to acquire data. Thus, the controller can skips the processes for referring to the memory according to the value of the counter as described above, which contributes to fast and efficient data acquisition.

### «Computer Readable Recording Medium»

It is possible to record a program which causes a computer to implement any of the functions described above on a computer readable recording medium. Here, the functions include setting of a register for example. In addition, by causing the computer to read in the program from the recording medium and execute it, the function thereof can be provided. Here, the computer includes clusters and controllers for example.

The computer readable recording medium mentioned herein indicates a recording medium which stores information such as data and a program by an electric, magnetic, optical, mechanical, or chemical operation and allows the stored information to be read from the computer. Of such recording media, those detachable from the computer include, e.g., a flexible disk, a magneto-optical disk, a CD-ROM, a CD-R/W, a DVD, a DAT, an 8-mm tape, and a memory card. Of such recording media, those fixed to the computer include a hard disk and a ROM (Read Only Memory).

According to an embodiment of the invention, there is provided:
A. An information processing apparatus including an operation processing apparatus connected with another operation processing apparatus, wherein
   the operation processing apparatus (50) includes;
   an operation processing unit (500) configured to perform an operation process using third data administered by the own operation processing apparatus and fourth data administered by another operation processing apparatus and acquired from another operation processing apparatus;
   a main memory (502) configured to store the third data; and
   a control unit (501) configured to include a storing unit (504) configured to store a status of use of data indicating whether or not the third data is held by another operation processing apparatus and a indicating unit (501b) configured to indicate a transition between the status in which the third data is held by another operation processing apparatus and the status in which the third data is not held by another operation processing apparatus, wherein when the indicating unit indicates that the third data is not held by another operation processing apparatus and a data acquisition request occurs for the third data, the control unit skips a process for referring to the status of use of the third data stored in the storing unit.
B. The information processing apparatus according to A, wherein the operation processing apparatus includes a setting unit configured to set the indicating unit to an operating state, and
   the indicating unit indicates that the transition occurs when the indicating unit is set to the operating state.
C. The information processing apparatus according to A or B, wherein
   the indicating unit indicates the transition by increasing and decreasing an indicating value from a reference value, the reference value indicating that the third data is not held by another operation processing apparatus,
   the indicating unit performs increment of the indicating value when the status of use of data indicating that the third data is not held by another operation processing apparatus changes to the status of use of data indicating that the third data is held by another operation processing apparatus, and
   the indicating unit performs decrement of the indicating value when the status of use of data indicating that the third data is held by another operation processing apparatus changes to the status of use of data indicating that the third data is not held by another operation processing apparatus.
D. The information processing apparatus according to any one of A to C, wherein
   the operation processing apparatus includes a plurality of units each configured to function as the indicating unit, and
   the plurality of units indicate, for different pieces of data stored in the main memory, transitions between the status of use of data indicating that the data is held by another operation processing apparatus and the status of use of data indicating that the data is not held by another operation processing apparatus.
E. The information processing apparatus according to any one of A to D, wherein
   the operation processing apparatus further includes a signal processing unit configured to provide a predetermined signal for the control unit,
   the control unit refers to the storing unit according to the predetermined signal, and
   the signal processing unit does not provide the predetermined signal for the control unit when the indicating unit indicates that the third data is not heldby another operation processing apparatus and the data acquisition request occurs for the third data.
F. The information processing apparatus according to any one of A to D, wherein
   the operation processing apparatus further includes a notifying unit configured to notify the control unit, when the indicating unit indicates that the third data is not held by another operation processing apparatus and the data acquisition request occurs for the third data, that the status of use of the requested third data is not found in the storing unit.

## Claims

1. An operation processing apparatus (50) connected with another operation processing apparatus (60), comprising:
an operation processing unit (500) configured to perform an operation process using first data administered by the own operation processing apparatus and second data administered by another operation processing apparatus and acquired from another operation processing apparatus;
a main memory (502) configured to store the first data; and
a control unit (501) configured to include a storing unit (504) configured to store a status of use of data indicating whether or not the first data is held by another operation processing apparatus and a indicating unit (501b) configured to indicate a transition between the status in which the first data is held by another operation processing apparatus and the status in which the first data is not held by another operation processing apparatus, wherein when the indicating unit indicates that the first data is not held by another operation processing apparatus and a data acquisition request occurs for the first data, the control unit skips a process for referring to the status of use of the first data stored in the storing unit.

2. The operation processing apparatus according to claim 1, further comprising a setting unit configured to set the indicating unit to an operating state,
wherein when the indicating unit is set to the operating state, the indicating unit indicates the transition.

3. The operation processing apparatus according to claim 1 or 2, wherein
the indicating unit indicates the transition by increasing and decreasing an indicating value from a reference value, the reference value indicating that the first data is not held by another operation processing apparatus,
the indicating unit performs increment of the indicating value when the status of use of data indicating that the first data is not held by another operation processing apparatus changes to the status of use of data indicating that the first data is held by another operation processing apparatus, and
the indicating unit performs decrement of the indicating value when the status of use of data indicating that the first data is held by another operation processing apparatus changes to the status of use of data indicating that the first data is not held by another operation processing apparatus.

4. The operation processing apparatus according to any one of claims 1-3, wherein
the operation processing apparatus includes a plurality of units each configured to function as the indicating unit, and
the plurality of units indicate, for different pieces of data stored in the main memory, transitions between the status of use of data indicating that the data is held by another operation processing apparatus and the status of use of data indicating that the data is not held by another operation processing apparatus.

5. The operation processing apparatus according to any one of claims 1-4, further comprising a signal processing unit configured to provide a predetermined signal for the control unit,
wherein the control unit refers to the storing unit according to the predetermined signal, and
the signal processing unit does not provide the predetermined signal for the control unit when the indicating unit indicates that the first data is not held by another operation processing apparatus and the data acquisition request occurs for the first data.

6. The operation processing apparatus according to any one of claims 1-4, further comprising:
a notifying unit configured to notify the control unit, when the indicating unit indicates that the first data is not held by another operation processing apparatus and the data acquisition request occurs for the first data, that the status of use of the requested first data is not found in the storing unit.

7. An information processing apparatus including an operation processing apparatus according to any of claims 1-6.

8. A method of controlling an information processing apparatus, the method comprising:
storing in a storing unit (504) a status of use of data indicating that fifth data stored in a main memory (502) in a firstoperationprocessingunit (500) included in the information processing apparatus (2), the operation processing unit per forming an operation process using the fifth data administered by the first operation processing apparatus and sixth data administered by a second operation processing apparatus (60) connected with the first operation processing apparatus and acquired from the second operation processing apparatus;
indicating by use of a indicating unit a transition regarding the status of use of data stored in the storing unit between the status in which the fifth data is held by the second operation processing apparatus and the status in which the fifth data is not held by the second operation processing apparatus,
skipping by use of a control unit (501) a process for referring to the status of use of the fifth data stored in the storing unit when the transition to the status of use of data in which the fifth data is not held by the second operation processing apparatus is indicated and a data acquisition request occurs for the fifth data.

9. The method of controlling an information processing apparatus according to claim 8, further comprising:
setting the indicating unit to an operating state,
wherein the indicating unit indicates that the transition occurs when the indicating unit is set to the operating state.

10. The method of controlling an information processing apparatus according to claim 8 or 9, wherein
the indicating unit indicates the transition by increasing and decreasing an indicating value from a reference value, the reference value indicating that the fifth data is not held by the second operation processing apparatus,
the indicating unit performs increment of the indicating value when the status of use of data indicating that the fifth data is not held by the second operation processing apparatus changes to the status of use of data indicating that the fifth data is held by the second operation processing apparatus, and
the indicating unit performs decrement of the indicating value when the status of use of data indicating that the fifth data is held by the second operation processing apparatus changes to the status of use of data indicating that the fifth data is not held by the second operation processing apparatus.

11. The method of controlling an information processing apparatus according to any one of claims 8-10, wherein
the first operation processing apparatus includes a plurality of units each configured to function as the indicating unit, and
the plurality of units indicate, for different pieces of data stored in the main memory, transitions between the status of use of data indicating that the data is held by the second operation processing apparatus and the status of use of data indicating that the data is not held by the second operation processing apparatus.

12. The method of controlling an information processing apparatus according to any one of claims 8-11, further comprising:
providing by use of a signal processing unit a predetermined signal for the control unit,
wherein the control unit refers to the storing unit according to the predetermined signal, and
the signal processing unit does not provide the predetermined signal for the control unit when the indicating unit indicates that the fifth data is not held by the second operation processing apparatus and the data acquisition request occurs for the fifth data.

13. The method of controlling an information processing apparatus according to any one of claims 8-11, further comprising:
notifying the control unit, when the indicating unit indicates that the fifth data is not held by the second operation processing apparatus and the data acquisition request occurs for the fifth data, that the status of use of the requested fifth data is not found in the storing unit.
